# EUROPÄISCHE PATENTSCHRIFT

(11) **EP 1 269 278 B1**
(45) Veröffentlichungstag und Bekanntmachung des Hinweises auf die Patenterteilung: **03.12.2003**
(21) Anmeldenummer: 00915194.5
(22) Anmeldetag: 01.04.2000
(51) Int. Cl.: G05B 19/418

(54) **VERFAHREN UND SYSTEM ZUR ADAPTIVEN STEUERUNG KOMPLEXER FERTIGUNGSKETTEN**
METHOD AND SYSTEM FOR IMPLEMENTING THE ADAPTIVE CONTROL OF COMPLEX MANUFACTURING CHAINS
PROCEDE ET SYSTEME DE COMMANDE ADAPTATIVE DE CHAINES DE FABRICATION COMPLEXES

(43) Veröffentlichungstag der Anmeldung: 02.01.2003
(73) Patentinhaber: ABB Research Ltd., 8050 Zürich (CH)
(72) Erfinder: VOLLMAR, Gerhard, D-67149 Meckenheim (DE); MILANOVIC, Raiko, D-69121 Heidelberg (DE)
(74) Vertreter: Miller, Toivo
(86) Internationale Anmeldenummer: EP0002928
(87) Internationale Veröffentlichungsnummer: WO01075539

(56) Entgegenhaltungen:
- US-A- 5 229 948
- US-A- 5 260 868
- US-A- 5 993 041
- F. F. CHEN, S. THINPHANGNGA: "ANALYTICAL MODELING AND ANALYSIS OF FLEXIBLE MANUFACTURING SYSTEMS CONSIDERING SYSTEM COMPONENT FAILURE/REPAIR RATES" JOURNAL OF MANUFACTURING SYSTEMS, Bd. 15, Nr. 3, 1996, Seiten 143-154, XP004008181

## Beschreibung

Die Erfindung bezieht sich auf ein Verfahren zur adaptiven Steuerung komplexer Fertigungsketten, sowie auf ein System zur Durchführung eines solchen Verfahrens.

In vielen Industriezweigen ist der Fertigungsprozeß in unterschiedliche Fertigungslinien, auch Fertigungsketten genannt, unterteilt. Eine Fertigungskette ist die Hintereinanderschaltung von mehreren Fertigungsmaschinen. Zwischen den Maschinen befinden sich sogenannte Puffer, mit denen unterschiedliche Bearbeitungsgeschwindigkeiten der Fertigungsmaschinen und kurze Stillstände ausgeglichen werden können.

Die wesentliche Kenngröße eines Puffers ist die Pufferzeit, also eine Zeit, während der ein Vorrat an Zwischenprodukten erzeugt wird, mit dem ein Stillstand einer Maschine überbrückt werden kann, ohne daß die Fertigungslinie zum Stillstand kommt. Für die Festlegung der jeweiligen Pufferzeit gibt es Richtwerte des Herstellers der Fertigungsanlage.

Eine nach solchen Vorgaben eingestellte Soll-Pufferzeit muß jedoch keineswegs die optimale Pufferzeit sein, besonders im Hinblick auf die Produktionskosten, die ganz wesentlich durch Produktionsausfälle beeinflußt werden. Die optimale Pufferzeit gleicht Störungen der jeweils vorangehenden Maschine aus, so daß es nicht zum Produktionsausfall kommt. Mit festen Zeitvorgaben können optimale Pufferzeiten nicht erreicht werden, weil Einflüsse wie Maschinenalter oder Qualität des verarbeiteten Materials nicht berücksichtigt sind.

Der Erfindung liegt daher die Aufgabe zugrunde, ein System und ein Verfahren zur adaptiven Steuerung einer Fertigungskette durch automatisierte Optimierung der Soll-Pufferzeiten von Fertigungsketten anzugeben.

Diese Aufgabe wird durch ein Verfahren zur Steuerung eines diskreten Fertigungsprozesses gelöst, das die im Anspruch 1 angegebenen Merkmale aufweist. Ein entsprechendes System ist im Anspruch 2 angegeben.

Mit der Erfindung wird bei einer Fertigungskette eine automatisierte Optimierung der Pufferzeiten während ihres gesamten Lebenszyklusses erreicht.

Eine weitere Beschreibung der Erfindung erfolgt nachstehend anhand eines in Zeichnungsfiguren angegebenen Ausführungsbeispiels.

Es zeigt:
Fig. 1 den Aufbau einer Fertigungskette,
Fig. 2 ein System zur automatisierten Bestimmung optimaler Pufferzeiten,
Fig. 3 die Arbeitsweise des Systems,
Fig. 4 Fehlerereignisdaten, und
Fig. 5 ein Bewertungsmodell.

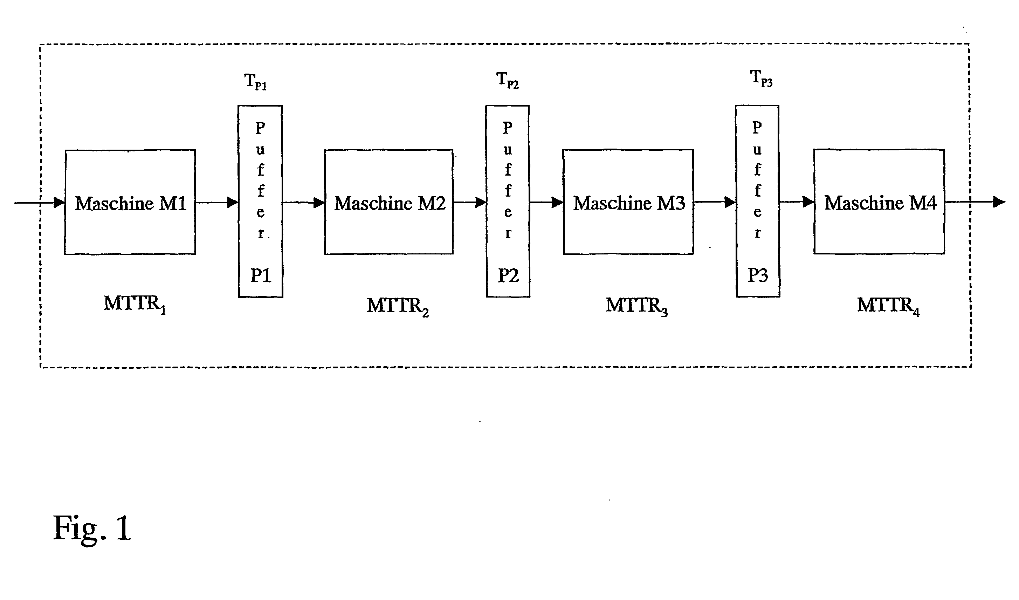

Fig. 1 zeigt schematisch den Aufbau einer Fertigungskette. Der Fertigungsprozeß in Fig. 1 ist einseitig gerichtet und beginnt mit Maschine M1. Zwischen den Maschinen M1 bis M4 sind jeweils Puffer P1 bis P3 zur Speicherung von Zwischenprodukten eingerichtet. Die entscheidende Kenngröße eines Puffers ist die Pufferzeit T_{P}, die durch Abarbeitung eines Zwischenproduktvorrates bei einem Maschinenstillstand überbrückt werden kann. Jeder Maschine ist eine Kenngröße MTTR (Mean Time to Repair) zugeordnet. Dieses Maß gibt eine statistisch gemittelte Reparaturzeit an.

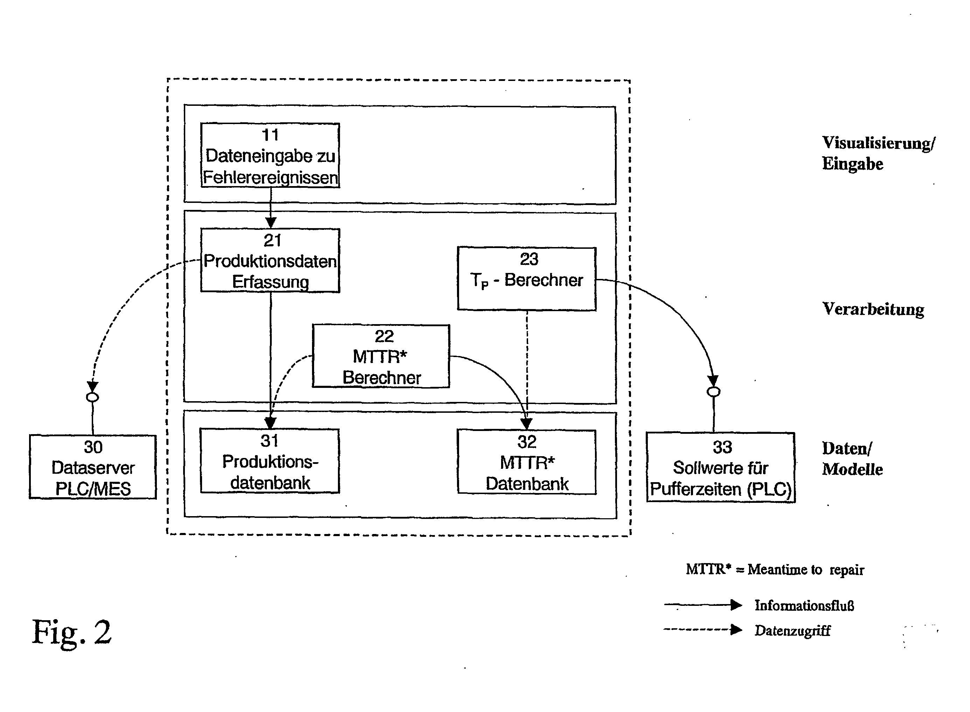

Fig. 2 zeigt ein System zur automatisierten Bestimmung optimaler Pufferzeiten T_{Pi}, die als Sollwerte in einem Sollwertspeicher 33 einer speicherprogrammierten Steuerung (PLC) gespeichert werden.

Bei diesem System enthält eine Datenverarbeitungseinrichtung eine Produktionsdaten-Erfassungseinrichtung 21, die Zugriff auf einen Datenserver 30 hat, in dem Produktionsdaten erfaßt sind, und der mittels einer Dateneingabe 11 zusätzliche Fehlerereignisdaten eingebbar sind. Die Produktionsdaten-Erfassungseinrichtung 21 ist dafür eingerichtet, Maschinen-Stillstandszeiten zu erfassen und in einer Produktionsdatenbank 31 als Zeitreihen abzulegen. Ein MTTR-Berechner 22 hat Zugriff auf die Produktionsdatenbank 31, und speichert berechnete MTTR-Kennzahlen in einer MTTR-Datenbank 32. Ein außerdem in der Datenverarbeitungseinrichtung enthaltener T_{P}-Berechner 23 hat Zugriff auf die MTTR-Datenbank 32 und legt von ihm berechnete Pufferzeiten T_{Pi} im Sollwertspeicher 33 ab.

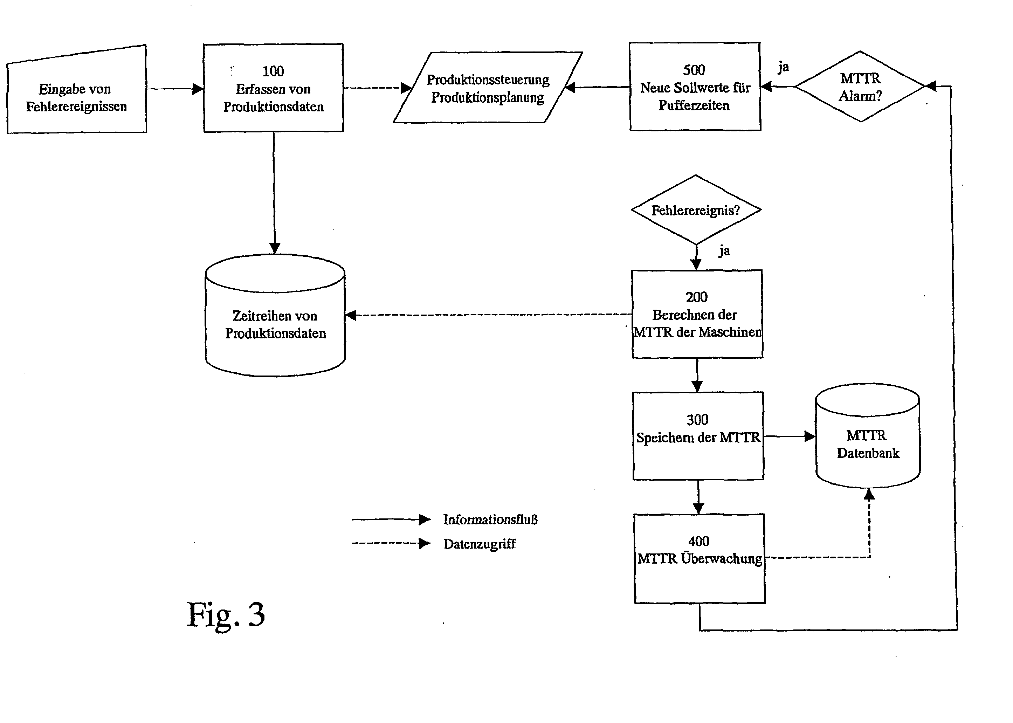

Fig. 3 zeigt die Arbeitsweise des in Fig. 2 dargestellten Systems. Dabei werden in einem Schritt 100 mittels der Produktionsdaten-Erfassungseinrichtung 21 die für die Optimierung benötigten Stillstandszeiten der Maschinen einschließlich Fehlerereignisangaben erfaßt und in der Produktionsdatenbank 31 als Zeitreihen abgelegt. In Schritt 200 berechnet der MTTR-Berechner 22 die MTTR-Kennzahlen. Die MTTR ergibt sich aus der Dauer des Stillstände im Lebenszyklus einer Maschine. Die Information dazu liegt in der Produktionsdatenbank 31. Tritt ein Fehlerereignis auf, wird die MTTR erneut berechnet.

In Schritt 300 wird die MTTR in der MTTR-Datenbank 32 gespeichert. Zu jeder Maschine wird die aktuelle MTTR-Kennzahl gespeichert. Es ist auch möglich, die Veränderungen der MTTR während der gesamten Betriebsdauer zwecks späterer Analyse zusätzlich in der MTTR-Datenbank 32 abzulegen.

In Schritt 400 wird beobachtet, ob sich die MTTR im Lauf der Zeit signifikant ändert. Eine Signifikanz wird erkannt (MTTR Alarm), wenn ein vorgegebener Delta-Schwellwert überschritten wird.

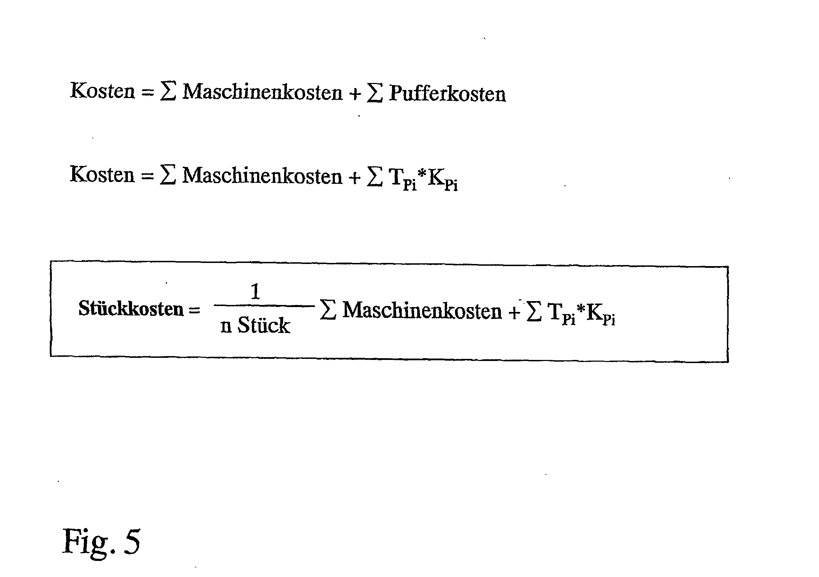

In Schritt 500 wird durch den T_{P}-Berechner 23 die jeweilige neue Pufferzeit T_{Pi} berechnet und als Sollwert im Sollwertspeicher 31 vorgegeben. Zur Festlegung der optimalen Pufferzeit können unterschiedliche Bewertungsmodelle herangezogen werden. Werden beispielsweise die Produktionskosten einzig durch den Stillstand der Fertigungskette beeinflußt, dann werden die Pufferzeiten so gewählt, daß die Maschinenstillstandszeiten ausgeglichen werden. Dies bedeutet, daß die optimale Pufferzeit sich direkt aus der MTTR der Maschine vor dem jeweiligen Puffer ergibt. Fig. 5 zeigt beispielhaft ein Bewertungsmodell, das zusätzlich die Kosten durch den Puffer berücksichtigt.

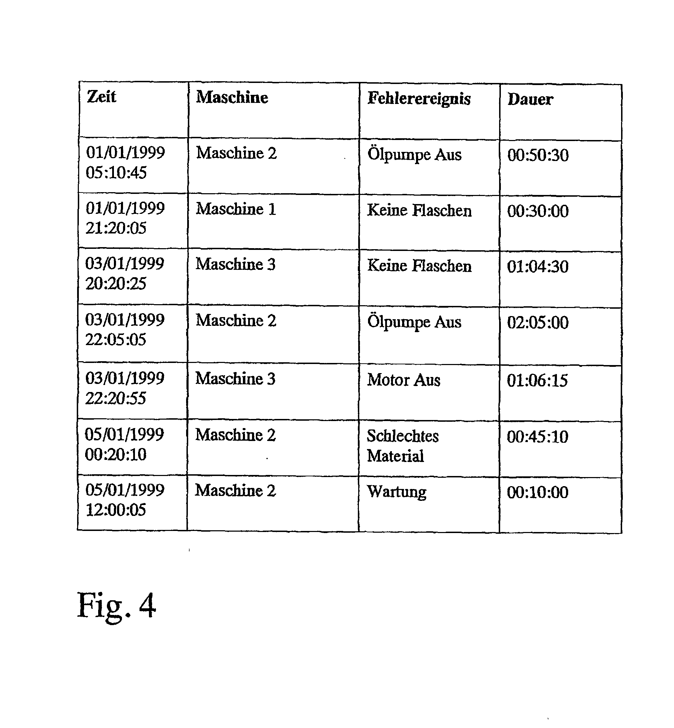

Fig. 4 zeigt beispielhaft Fehlerereignisdaten, wobei jeweils Startzeit, Maschine, Fehlerereignis und Dauer aufgelistet sind. Die Fehlereignisdaten können entweder durch die Produktionsdatenerfassung 21 automatisch hergeleitet werden oder der Maschinenbediener gibt die Daten über die Dateneingabe 11 ein.

Fig. 5 zeigt beispielhaft ein Bewertungsmodell. Die Bewertung wird anhand der Produktstückkosten vorgenommen. Im Beispiel werden die Produktionsstückkosten beeinflußt durch Maschinenkosten, Pufferkosten und der Produktmenge n. Im Beispiel steigen die Pufferkosten bei einem konstanten Pufferkostenfaktor K_{P} mit der Pufferzeit T_{P}.

## Patentansprüche

1. Verfahren zur Steuerung eines diskreten Fertigungsprozesses, bei dem ein Produkt in mehreren Fertigungsschritten, jeweils unter Einsatz einer Maschine (M1,M2,M3,M4) bearbeitet oder hergestellt wird, so daß je nach Fertigungsschritt unterschiedliche Zwischenprodukte entstehen, und bei dem Pufferzeiten (T_{Pi}) definiert und berücksichtigt werden, während der eine Maschine (z.B. M4) für die Dauer des Ausfalls einer der Maschinen (z.B. M3) eines vorgeschalteten Fertigungsschritts unter Abarbeitung eines der zugehörigen Pufferzeit (z.B. T_{P3}) entsprechenden und in einem Puffer (P1,P2,P3, z.B. P3) während der Fertigung angelegten Zwischenproduktvorrates weiterarbeiten kann, und wobei
a) je Maschine (M1,M2,M3,M4) fortlaufend Produktionsdaten erfaßt werden,
b) unter Zugriff auf diese Produktionsdaten zyklisch statistisch gemittelte Reparaturzeiten MTTRᵢ "Mean Time To Repair" mittels eines MTTR-Berechners (22) berechnet werden, und
c) auf der Grundlage dieser Zeiten MTTRᵢ mittels eines T_{P}-Berechners (23) Pufferzeiten (T_{Pi}) berechnet werden, die einer Einrichtung (PLC) zur Steuerung des Fertigungsprozesses als Sollwerte für Pufferzeiten (T_{Pi}) zugeführt werden.

2. System zur Steuerung eines diskreten Fertigungsprozesses, bei dem ein Produkt in mehreren Fertigungsschritten, jeweils unter Einsatz einer Maschine (M1,M2,M3,M4) bearbeitet oder hergestellt wird, so daß je nach Fertigungsschritt unterschiedliche Zwischenprodukte entstehen, und bei dem einer Einrichtung (PLC) zur Steuerung des Fertigungsprozesses Sollwerte für Pufferzeiten (T_{Pi}) vorgegeben werden, während der eine Maschine (z.B. M4) für die Dauer des Ausfalls einer der Maschinen (z.B. M3) eines vorgeschalteten Fertigungsschritts unter Abarbeitung eines der zugehörigen Pufferzeit (z.B. T_{P3}) entsprechenden und in einem Puffer (P1,P2,P3, z.B. P3) während der Fertigung angelegten Zwischenproduktvorrates weiterarbeiten kann, wobei zur automatisierten Ermittlung jeweils optimaler Pufferzeiten (T_{Pi}) eine Datenverarbeitungseinrichtung verwendet ist, die
a) eine Produktionsdaten-Erfassungseinrichtung (21) aufweist, die Zugriff auf einen Datenserver (30) hat, in dem Produktions- oder Fehlerereignisdaten erfaßt sind, und der mittels einer Dateneingabe (11 ) zusätzliche Fehlerereignisdaten eingebbar sind, und wobei die Produktionsdaten-Erfassungseinrichtung 21 ist dafür eingerichtet, Maschinen-Stillstandszeiten zu erfassen und in einer Produktionsdatenbank (31 ) als Zeitreihen abzulegen,
b) einen MTTR-Berechner (22) aufweist, der Zugriff auf die Produktionsdatenbank (31 ) hat, und dafür eingerichtet ist, MTTR-Kennzahlen zu berechnen und in einer MTTR-Datenbank (32) abzulegen,
c) einen T_{P}-Berechner (23) aufweist, der Zugriff auf die MTTR-Datenbank (32) hat, und dafür eingerichtet ist, von ihm unter Verwendung eines Bewertungsmodells berechnete Pufferzeiten T_{Pi} in einem Sollwertspeicher (33) des Steuerungssystems abzulegen.

## Claims

1. Method of controlling a discrete production process, in which a product is processed or produced in a number of production steps, each using a machine (M1,M2,M3,M4), so that different intermediate products are produced, depending on the production step, and in which buffer times (T_{Pi}) are defined and taken into account during which one machine (e.g. M4) is able to continue to operate for the duration of the failure of one of the machines (e.g. M3) of a preceding production step by processing a stock of intermediate products corresponding to the associated buffer time (e.g. T_{P3}) and stored in a buffer (P1,P2,P3, e.g. P3) during the production, and where
a) production data are acquired continuously for each machine (M1,M2,M3,M4),
b) with access to these production data, statistically averaged repair times MTTRᵢ (Mean Time to Repair) are calculated cyclically by means of an MTTR calculator (22), and
c) on the basis of these times, MTTRᵢ, buffer times (T_{Pi}) are calculated by means of a T_{P} calculator (23) and are fed to a device (PLC) for controlling the production process as desired values for buffer times (T_{Pi}).

2. System of controlling a discrete production process, in which a product is processed or produced in a number of production steps, each using a machine (M1,M2,M3,M4), so that different intermediate products are produced, depending on the production step, and in which desired values for buffer times (Tₚᵢ) are predefined to a device (ALC) for controlling the production process, during which one machine (e.g. M4) is able to continue to operate for the duration of the failure of one of the machines (e.g. M3) of a preceding production step by processing a stock of intermediate products corresponding to the associated buffer time (e.g. T_{P3}) and stored in a buffer (P1,P2,P3, e.g. P3) during the production, where, for the automatic determination of optimum buffer times (T_{Pi}) in each case, a data processing device is used which
a) has a production data acquisition device (21), which has access to a data server (30) in which production or fault event data are recorded, and to which additional fault event data can be input by means of a data input (11), and where the production data acquisition device (21) is set up to register machine stoppage times and store them as time series in a production database (31),
b) has an MTTR calculator (22), which has access to the production database (31) and is set up to calculate MTTR characteristic values and store them in an MTTR database (32),
c) has a T_{P} calculator (23), which has access to the MTTR database (32) and is set up to store buffer times T_{Pi} calculated by it, using an assessment model, in a desired-value memory (33) of the control system.

## Revendications

1. Procédé de commande adaptative d'un processus de fabrication discret, dans lequel un produit est usiné ou fabriqué en plusieurs étapes de fabrication, en utilisant chaque fois une machine (M1, M2, M3, M4), de sorte qu'en fonction de l'étape de fabrication des produits intermédiaires différents sont élaborés, dans lequel des temps de réserve (Tₚᵢ) sont définis et pris en compte, pendant lesquels une machine (par exemple M4), pendant la durée d'indisponibilité d'une machine (par exemple M3) d'une étape de fabrication en amont, peut continuer à travailler en utilisant une réserve de produits intermédiaires correspondant au temps de réserve (par exemple T_{P3}) concerné, constituée au cours de la fabrication et stockée dans un tampon (P1, P2, P3, par exemple P3), et dans lequel
a) pour chaque machine (M1. M2. M3.M4) des données de production sont recueillies en continu,
b) à partir de ces données de production, des temps de réparation MTTRᵢ (Mean Time to Repair) cycliques, moyennés statistiquement, sont calculés à l'aide d'un calculateur de MTTR (22) et
c) sur la base de ces temps MTTR, des temps de réserve (T_{Pi}) sont calculés à l'aide d'un calculateur de T_{P}, lesquels temps de réserve sont transmis en tant que valeurs de consigne pour les temps morts (T_{Pi}) à un dispositif (PLC) pour la commande du processus de fabrication.

2. Système de commande adaptative d'un processus de fabrication discret, dans lequel un produit est usiné ou fabriqué en plusieurs étapes de fabrication, en utilisant chaque fois une machine (M1. M2. M3.M4), de sorte qu'en fonction de l'étape de fabrication des produits intermédiaires différents sont élaborés, dans lequel des valeurs de consigne pour des temps de réserve (T_{Pi}) sont prescrits à un dispositif (PLC) pour la commande du processus de commande, pendant lesquels une machine (par exemple M4) pendant la durée d'indisponibilité d'une machine (par exemple M3) d'une étape de fabrication en amont, peut continuer à travailler en utilisant une réserve de produits intermédiaires correspondant au temps de réserve (par exemple T_{P3}) concerné, constituée au cours de la fabrication et stockée dans un tampon (P1, P2, P3, par exemple P3), une installation de traitement de données étant utilisée pour déterminer de manière automatique des temps de réserve (T_{Pi}) optimaux, laquelle installation de traitement de données comprend
a) un système d'acquisition de données de production (21) qui a accès à un serveur de données (30), dans lequel sont stockées des données de production ou des données d'incident et auquel des données d'incident supplémentaires peuvent être entrées à l'aide d'un moyen d'entrée de données (11) et dans lequel le système d'acquisition de données de production (21) est agencé pour détecter les temps d'arrêt des machines et les inscrire sous forme de séquences temporelles dans une banque de données,
b) un calculateur de MTTR (22) qui a accès à la banque de données de production (31) et est agencé pour calculer des valeurs de MTTR et les enregistrer dans une banque de données de MTTR (32) et
c) un calculateur de T_{P} (23) qui a accès à la banque de données de MTTR (32) et est agencé pour enregistrer dans une mémoire de valeurs de consigne (33) des temps de réserve (T_{Pi}) calculés par celui-ci en utilisant un modèle de calcul.
